**Europäisches Patentamt**

**European Patent Office**

**Office européen des brevets**

(19)

(11) Veröffentlichungsnummer: **0 354 339**

**A2**

(12) # EUROPÄISCHE PATENTANMELDUNG

(21) Anmeldenummer: **89111899.4**

(51) Int. Cl.⁴: **G01G 19/62**

(22) Anmeldetag: **30.06.89**

(30) Priorität: **12.08.88 DE 3827425**

(43) Veröffentlichungstag der Anmeldung:
**14.02.90 Patentblatt 90/07**

(84) Benannte Vertragsstaaten:
**CH DE ES FR GB IT LI NL SE**

(71) Anmelder: **Sartorius GmbH.**
**Weender Landstrasse 94-108**
**D-3400 Göttingen(DE)**

(72) Erfinder: **Oldendorf, Christian**
**Zur Akelei 31**
**D-3400 Göttingen(DE)**
Erfinder: **Berthel, Dieter**
**Südring 27**
**D-3400 Göttingen(DE)**
Erfinder: **Melcher, Franz-Josef**
**Rosenstrasse 18**
**D-3414 Hardegsen(DE)**

(74) Vertreter: **Köhler, Rudolf**
**c/o Sartorius GmbH Weender Landstrasse**
**94-108**
**D-3400 Göttingen(DE)**

(54) **Elektronische Klassierwaage.**

(57) Für eine elektronische Klassierwaage mit einem Meßwertaufnehmer (1), mit einem dem Meßwertaufnehmer (1) nachgeschalteten digitalen Filter (2), mit einer Stillstandskontrollschaltung (23), mit mindestens zwei Grenzgewichtsspeichern (5,6) und mit einer digitalen Klassiereinheit (17...22), die das gefilterte Signal des Meßwertaufnehmers mit den gespeicherten Grenzgewichten vergleicht und bei Stillstand je nach Ergebnis dieses Vergleiches eines der Signale "Probengewicht unterhalb des unteren Grenzgewichtes", "Probengewicht zwischen den beiden Grenzgewichten" oder "Probengewicht oberhalb des oberen Grenzgewichtes" ausgibt, wird vorgeschlagen, daß der Gewichtswert der Probe nur in der Umgebung der Grenzgewichte mit der vollen Meßgenauigkeit ermittelt wird, während er sonst nur mit einer geringeren Meßgenauigkeit ermittelt wird. Dazu weist die Klassierwaage zusätzliche Subtrahierer (3,4) Schwellwertspeicher (11) und Komparatoren (9,10) auf, die die digitale Filterung (2,16) und/oder die Stillstandskontrollschaltung (23) entsprechend verändern.

Fig. 1

## Elektronische Klassierwaage

Die Erfindung bezieht sich auf eine elektronische Klassierwaage mit einem Meßwertaufnehmer, mit einem dem Meßwertaufnehmer nachgeschalteten digitalen Filter, mit einer Stillstandskontrollschaltung, mit mindestens zwei Grenzgewichtsspeichern und mit einer digitalen Klassiereinheit, die das gefilterte Signal des Meßwertaufnehmers mit den gespeicherten Grenzgewichten vergleicht und bei Stillstand je nach Ergebnis dieses Vergleiches eines der Signale "Probengewicht unterhalb des unteren Grenzgewichtes", "Probengewicht zwischen den beiden Grenzgewichten" oder "Probengewicht oberhalb des oberen Grenzgewichtes" ausgibt.

Elektronische Klassierwaagen dieser Art sind allgemein bekannt; in ihrer einfachsten Form mit genau zwei vorgegebenen Grenzgewichten werden sie auch als Plus/Minus- Waagen bezeichnet. Sind mehr als zwei Grenzgewichte vorgegeben, so gibt die Klassiereinheit selbstverständlich weitere Signale entsprechend der Einordnung in eine der Gewichtsklassen aus.

Genauso wie bei allen Waagen muß man bei der Auslegung elektronischer Klassierwaagen einen Kompromiß finden zwischen dem Wunsch nach möglichst schneller Ermittlung des Klassierergebnisses und dem Wunsch nach möglichst scharfer Grenze zwischen den einzelnen Klassen - also hoher Klassiergenauigkeit.

Aufgabe der Erfindung ist es nun, die bekannten elektronischen Klassierwaagen so weiterzuentwickeln, daß die Geschwindigkeit der Klassierung erhöht wird, ohne daß die Klassiergenauigkeit verschlechtert wird.

Erfindungsgemäß wird dies dadurch erreicht, daß der Gewichtswert der Probe nur in der Umgebung der Grenzgewichte mit der vollen Meßgenauigkeit ermittelt wird, während er sonst nur mit einer geringeren Meßgenauigkeit ermittelt wird.

Dazu ist in einer ersten vorteilhaften Ausgestaltung jedem Grenzgewichtsspeicher ein Subtrahierer zugeordnet, der die Differenz zwischen dem Ausgangssignal des digitalen Filters und dem jeweiligen Grenzgewicht bildet, jedem Subtrahierer ist mindestens ein Komparator nachgeschaltet, der die Differenz mit einem vorgegebenen Schwellwert vergleicht, und die Filterwirkung des digitalen Filters wird vergrößert, falls einer der Komparatoren signalisiert, daß die Differenz unterhalb des vorgegebenen Schwellwertes liegt.

Oder in einer zweiten vorteilhaften Ausgestaltung ist jedem Grenzgewichtsspeicher ein Subtrahierer zugeordnet, der die Differenz zwischen dem Ausgangssignal des digitalen Filters und dem jeweiligen Grenzgewicht bildet, jedem Subtrahierer ist mindestens ein Komparator nachgeschaltet, der die Differenz mit einem vorgegebenem Schwellwert vergleicht, und die Stillstandskontrollschaltung schaltet ein engeres Stillstandskriterium ein, falls einer der Komparatoren signalisiert, daß die Differenz unterhalb des vorgegebenen Schwellwertes liegt.

Beiden Ausgestaltungen ist also gemeinsam, daß der mit geringerer Genauigkeit ermittelte Meßwert daraufhin geprüft wird, ob er in der Nähe einer der Grenzgewichte liegt; ist dies der Fall, so wird der Meßwert genauer bestimmt (entweder durch Vergrößerung der Filterwirkung des digitalen Filters oder durch die Benutzung eines engeren Stillstandskriteriums); ist dies jedoch nicht der Fall, so wird der mit geringerer Genauigkeit ermittelte Meßwert direkt der Klassiereinheit zugeführt und das Klassierergebnis ausgegeben. Dadurch braucht die erfindungsgemäße Klassierwaage nur bei den wenigen Teilen, deren Gewicht in der Nähe eines Grenzgewichtes liegt, die bisher übliche Zeit zur Ermittlung des Klassierergebnisses, während bei allen anderen Teilen das Ergebnis deutlich schneller ermittelt wird.

Die Filterwirkung des digitalen Filters wird dabei vorteilhafterweise entweder durch Änderung der Filterkoeffizienten oder durch das Zuschalten eines weiteren Filters vergrößert.

In einer vorteilhaften Weiterbildung der Erfindung sind jedem Subtrahierer zwei Komparatoren nachgeschaltet, die die Differenz mit zwei vorgegebenen Schwellwerten ver gleichen und die Filterwirkung des digitalen Filters wird dementsprechend in insgesamt drei Stufen verändert bzw. die Stillstandskontrollschaltung kann eines von drei verschiedenen Stillstandskriterien einschalten. Dadurch ist nicht nur die Ja/Nein-Entscheidung "Meßwert in der Nähe eines Grenzgewichtes" oder "Meßwert nicht in der Nähe eines Grenzgewichtes" möglich, sondern diese Nähe zu einem Grenzgewicht kann in zwei Stufen ermittelt werden und dementsprechend kann die Reaktion darauf (Vergrößerung der Filterwirkung bzw. Einschalten eines engeren Stillstandskriteriums) auch in drei verschiedenen Stufen erfolgen. Dadurch kann die Anzahl der Teile, deren Gewicht mit voller Genauigkeit ermittelt werden muß, noch geringer gehalten werden.

Die Erfindung wird im folgenden anhand der schematischen Figuren beschrieben. Dabei zeigt:

Fig. 1 das Schaltbild der Klassierwaage in einer ersten Ausgestaltung,

Fig. 2 das Schaltbild der Klassierwaage in einer zweiten Ausgestaltung,

Fig. 3 die Klassiergenauigkeit in Abhängigkeit vom Probengewicht und

Fig. 4 die Klassiergenauigkeit in Abhängigkeit vom Probengewicht bei einer Klassierschaltung mit zwei Schwellwerten.

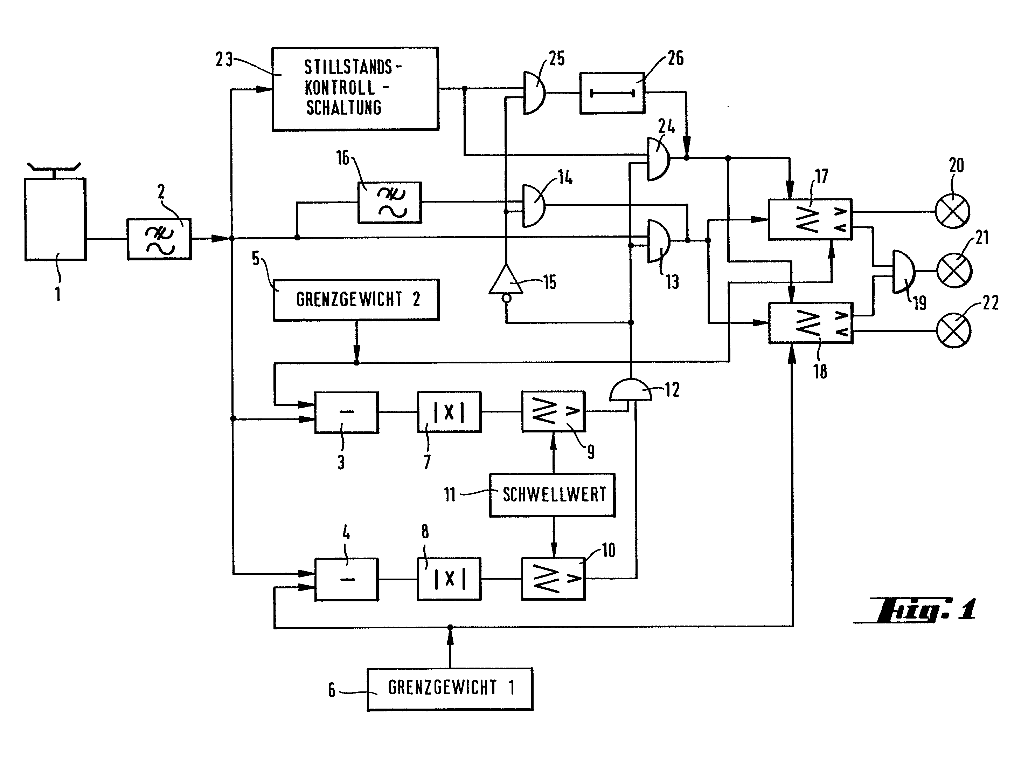

Im Schaltbild von Fig. 1 ist der Meßwertaufnehmer 1 der elektronischen Klassierwaage nur angedeutet, da er für die Erfindung unwesentlich ist. Das digitale Ausgangssignal des Meßwertaufnehmers wird in einem digitalen Filter 2 vorgefiltert und dann zwei Subtrahierern 3 und 4 zugeführt. Die Subtrahierer 3 und 4 bilden die Differenz zwischen dem Signal vom Meßwertaufnehmer und dem jeweiligen Grenz gewicht, das im Grenzgewichtsspeicher 5 bzw. 6 gespeichert ist. Das Vorzeichen dieser Differenz wird nicht berücksichtigt (Betragsbildner 7 und 8) und nur der absolute Betrag in den beiden Komparatoren 9 und 10 mit einem vorgegebenem Schwellwert, der im Speicher 11 gespeichert ist, verglichen.

Melden beide Komparatoren 9 und 10, daß diese Differenz größer ist als der Schwellwert, so wird über das Und-Tor 12 ein Signal ausgegeben und dadurch das Tor 13 geöffnet, das den Meßwert direkt vom Filter 2 zu den beiden Komparatoren 17 und 18 weiterleitet. Die Komparatoren 17 und 18 nehmen in bekannter Weise die eigentliche Klassierung vor. Sie erhalten ihre Vergleichswerte von den beiden Grenzgewichtsspeichern 5 und 6 und sie steuern - zusammen mit dem Und-Tor 19 - die drei Signallampen 20,21 und 22 an. Die Ansteuerung der Signallampe 20 bedeutet "Probengewicht oberhalb des oberen Grenzgewichtes", die Ansteuerung der Signallampe 21 bedeutet "Probengewicht zwischen den beiden Grenzgewichten" und die Ansteuerung der Signallampe 22 bedeutet "Probengewicht unterhalb des unteren Grenzgewichtes".

Ist jedoch an einem der beiden Komparatoren 9 und 10 das Eingangssignal kleiner als der Schwellwert im Schwellwertspeicher 11, so gibt das Und-Tor 12 kein Ausgangssignal ab und das Tor 13 bleibt geschlossen; statt dessen wird über den Inverter 15 das Tor 14 angesteuert und geöffnet, so daß in diesem Fall der Meßwert nach dem Vorfilter 2 noch ein weiteres Filter 16 durchläuft, ehe er zu den Komparatoren 17 und 18 gelangt.

Weiter ist in der Schaltung nach Fig. 1 eine Stillstandskontrollschaltung 23 vorhanden, die in bekannter Weise durch Vergleich aufeinanderfolgender Meßwerte das Ausgangs signal des Filters 2 auf Stillstand überwacht. Diese Stillstandskontrollschaltung 23 steuert entweder über das Tor 24 oder über das Tor 25 die beiden Komparatoren 17 und 18 an und sorgt damit dafür, daß während des Einschwingvorganges der Waage keine der Lampen 20...22 aufleuchtet. Hat nun in der weiter oben beschriebenen Weise das Ausgangssignal des Und-Tores 12 das Tor 13 geöffnet und damit den direkten Weg vom Filter 2 zu den Komparatoren 17 und 18 freigegeben, so wird durch dasselbe Signal auch das Tor 24 geöffnet, so daß auch das Stillstandssignal von der Stillstandskontrollschaltung 23 direkt den Komparatoren 17 und 18 zugeführt wird und damit die Klassierung freigegeben wird. - Gibt das Tor 12 jedoch kein Ausgangssignal ab, so wird zusammen mit dem Tor 14 das Tor 25 geöffnet, so daß in diesem Fall das Stillstandssignal von der Stillstandskontrollschaltung 23 über ein Verzögerungsglied 26 geleitet wird und dadurch die Komparatoren 17 und 18 erst etwas später aktiviert werden. Diese Verzögerungszeit ist so gewählt, daß am Ende die Filter 2 und 16 den Meßwert so gefiltert haben, daß die volle Meßgenauigkeit der Waage erreicht wird. Diese Einstellung entspricht der Einstellung üblicher Klassierwaagen, so daß in diesem Fall die Klassierung so lange dauert wie üblich. Melden jedoch beide Komparatoren 9 und 10 ein Überschreiten des Schwellwertes, gibt also das Und-Tor 12 ein Ausgangssignal ab und hat die Tore 13 und 24 geöffnet, so ist die Klassierung deutlich früher beendet als in üblichen Klassierwaagen, da die Klassierung bereits aufgrund des grob ermittelten Gewichtswertes erfolgt.

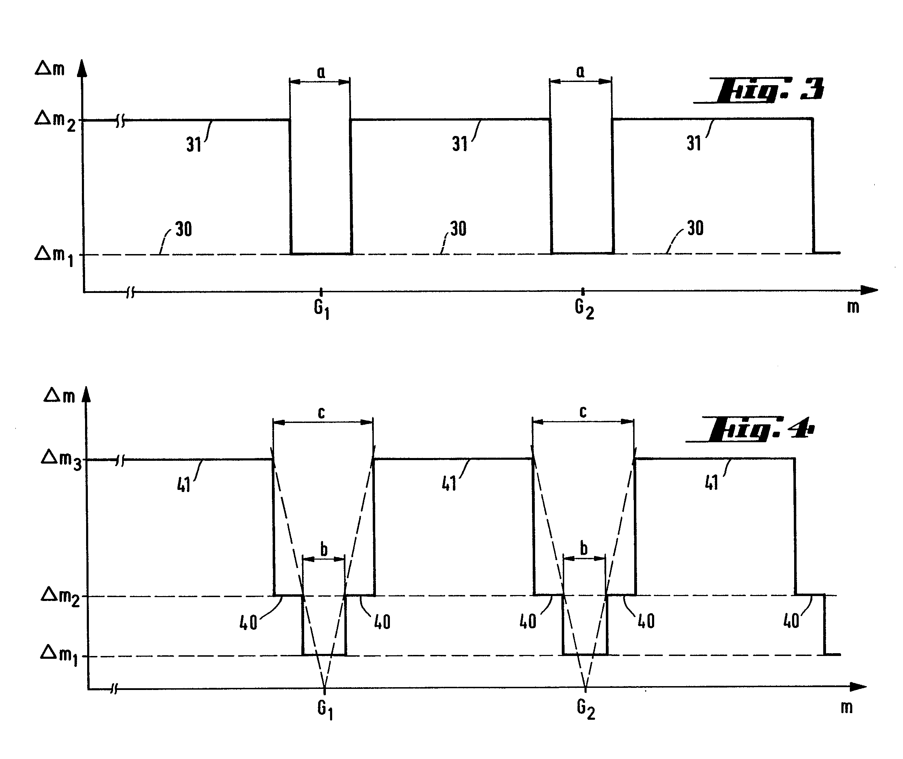

Die sich dadurch ergebende Klassiergenauigkeit $\Delta m$ ist in Fig. 3 nochmal graphisch als Funktion des Teilegewichtes m dargestellt. Die volle Klassiergenauigkeit, durch die gestrichelte Linie 30 dargestellt, wird nur in der Umge bung der beiden Grenzgewichte $G_1$ und $G_2$ ausgenutzt. Die Breite a dieser Bereiche entspricht dem doppelten Schwellwert aus dem Schwellwertspeicher 11 in Fig. 1. Außerhalb dieser Bereiche wird ein größerer Klassierfehler - entsprechend der Linie 31 - in Kauf genommen, um die Klassierung zu beschleunigen. Solange der Meßfehler $\Delta m_2$ geringer ist als $a/2$, ist eine falsche Klasseneinteilung durch diesen größeren Klassierfehler ausgeschlossen, so daß die Güte der Klassierung nicht beeinträchtigt wird.

Aus den eben angestellten Fehlerüberlegungen ergibt sich, daß die Meßungenauigkeit mit wachsendem Abstand von den Grenzgewichten linear ansteigen darf. Dies ist in Fig. 4 gestrichelt gezeichnet. Diese theoretische Fehlerkurve wird natürlich durch eine Treppenkurve, wie sie in Fig. 4 als durchgezogene Linie 40 eingezeichnet ist, besser angenähert als durch die Rechteckkurve aus Fig. 3. Daher kann der erlaubte Fehler $\Delta m_3$ im oberen Teil 41 der Kurve auch noch größer gewählt sein als im entsprechenden Bereich 31 in Fig. 3.

Die Treppenkurve in Fig. 4 kann schaltungsmäßig dadurch realisiert werden, daß in einer Schaltung nach Fig. 1 nicht nur die beiden Komparatoren 9 und 10 und der zugehörige Schwellwertspeicher 11 vorhanden sind, sondern insgesamt vier Komparatoren und zwei zugehörige Schwellwertspeicher. Der erste Schwellwert muß dabei die Größe b/2 haben und der zweite Schwellwert die Größe c/2. Dementsprechend müssen statt des einen Filters 16 zwei verschiedene Filter zuschaltbar sein und auch die Zeitverzögerung 26 muß in zwei Stufen vorhanden sein. Einzelheiten dieser Schaltung kann jeder Fachmann leicht zusammenstellen, so daß hier auf eine zeichnungsmäßige Darstellung verzichtet werden kann. Dasselbe gilt für Schaltungsvarianten mit noch mehr Schwellwerten und Genauigkeitsstufen.

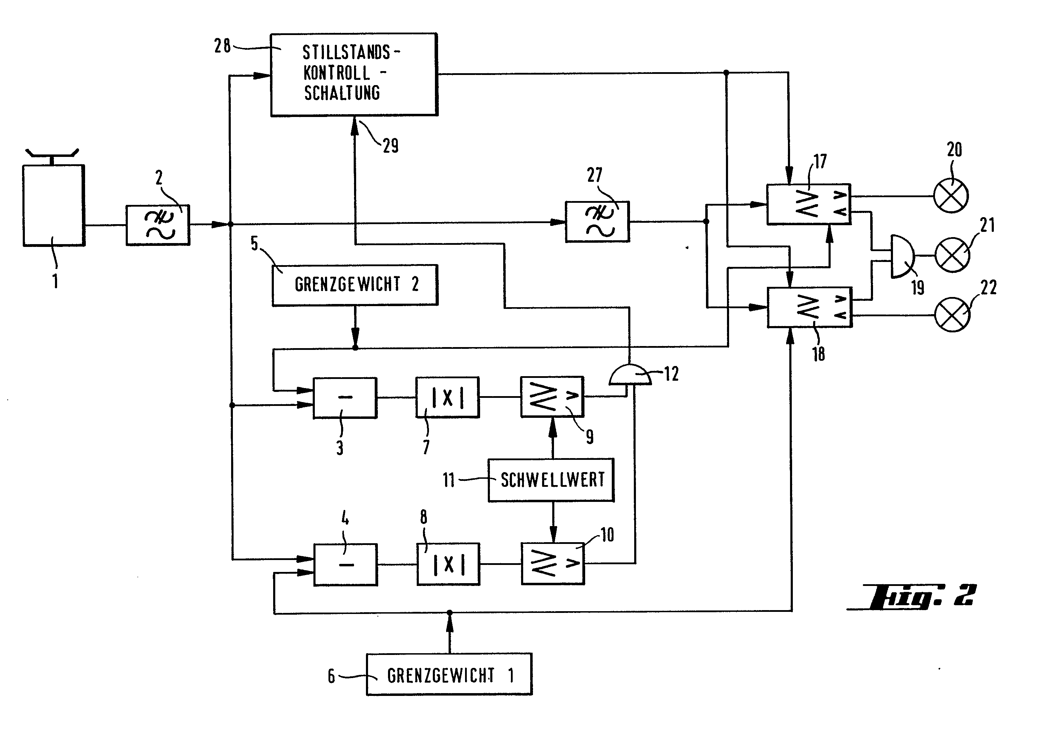

Eine zweite Ausgestaltung der elektronischen Klassierwaage zeigt das Schaltbild in Fig. 2. Der Aufbau und die Funktion der Schaltungsteile 1...12 und der Klassiereinheit 17...22 ist wie in der Ausgestaltung nach Fig. 1 und deshalb mit den gleichen Bezugszahlen gekennzeichnet. Das digitale Filter ist in zwei Teilfilter 2 und 27 aufgeteilt und so dimensioniert, daß sich nach der entsprechenden Wartezeit die volle Klassiergenauigkeit ergibt. Das Signal vom Und-Tor 12 verändert die Filter nicht, sondern wirkt nur auf die Stillstandskontrollschaltung 28, die dazu einen zusätzlichen Umschalteingang 29 aufweist. Mit einem Signal am Umschalteingang 29 wird ein sehr weites Stillstandskriterium benutzt, das beim Einschwingvorgang bald ein Stillstandssignal an die Komparatoren 17 und 18 abgibt, während ohne ein Signal am Umschalteingang 29 ein enges Stillstandskriterium benutzt wird, das beim Einschwingvorgang erst später ein Stillstandssignal abgibt. - Die Wirkungsweise dieser Schaltung ist genauso wie die Wirkungsweise der Schaltung nach Fig. 1: Bei Meßwerten nahe der Grenzgewichte wird der Meßwert mit voller Genauigkeit bestimmt, während sonst der Meßwert nur mit eingeschränkter Genauigkeit ermittelt wird.

Die Erweiterung der Schaltung in Fig. 2 auf mehrere Schwellwerte zur Nachbildung der Fehlerkurve nach Fig. 4 ist jedem Fachmann leicht möglich, so daß hier auf eine detaillierte Erörterung verzichtet werden kann.

Ebenso ist es jedem Fachmann leicht möglich, die in den Fig. 1 und 2 gezeigten Schaltungen in ein Programm für einen Mikroprozessor zu überführen, ohne die Funktion zu ändern. Genauso kann jeder Fachmann nach den vorstehenden Erläuterungen die im Unteranspruch 3 angegebene Variante realisieren, bei der die Filterwirkung des digitalen Filters durch eine Änderung der Filterkoeffizienten des Filters 2 verändert wird.

## Ansprüche

1. Elektronische Klassierwaage
- mit einem Meßwertaufnehmer (1),
- mit einem dem Meßwertaufnehmer (1) nachgeschalteten digitalen Filter (2),
- mit einer Stillstandskontrollschaltung (23,28),
- mit mindestens zwei Grenzgewichtsspeichern (5,6)
- und mit einer digitalen Klassiereinheit (17...22), die das gefilterte Signal des Meßwertaufnehmers mit den gespeicherten Grenzgewichten vergleicht und bei Stillstand je nach Ergebnis dieses Vergleiches eines der Signale "Probengewicht unterhalb des unteren Grenzgewichtes", "Probengewicht zwischen den beiden Grenzgewichten" oder "Probengewicht oberhalb des oberen Grenzgewichtes" ausgibt,
dadurch gekennzeichnet,
- daß der Gewichtswert der Probe nur in der Umgebung der Grenzgewichte mit der vollen Meßgenauigkeit ermittelt wird, während er sonst nur mit einer geringeren Meßgenauigkeit ermittelt wird.

2. Elektronische Klassierwaage nach Anspruch 1, dadurch gekennzeichnet,
- daß jedem Grenzgewichtsspeicher (5,6) ein Subtrahierer (3,4) zugeordnet ist, der die Differenz zwischen dem Ausgangssignal des digitalen Filters (2,) und dem jeweiligen Grenzgewicht bildet,
- daß jedem Subtrahierer (3,4) mindestens ein Komparator (9,10) nachgeschaltet ist, der die Differenz mit einem vorgegebenen Schwellwert (11) vergleicht,
- und daß die Filterwirkung des digitalen Filters vergrößert wird, falls einer der Komparatoren (9,10) signalisiert, daß die Differenz unterhalb des vorgegebenen Schwellwertes (11) liegt.

3. Elektronische Klassierwaage nach Anspruch 2, dadurch gekennzeichnet,
- daß die Filterwirkung des digitalen Filters (2) durch Änderung der Filterkoeffizienten vergrößert wird.

4. Elektronische Klassierwaage nach Anspruch 2, dadurch gekennzeichnet,
- daß die Filterwirkung des digitalen Filters (2) durch das Zuschalten eines weiteren digitalen Filters (16) vergrößert wird.

5. Elektronische Klassierwaage nach einem der Ansprüche 2 bis 4, dadurch gekennzeichnet,
- daß jedem Subtrahierer (3,4) zwei Komparatoren nachgeschaltet sind, die die Differenz mit zwei vorgegebenen Schwellwerten vergleichen,
- und daß die Filterwirkung des digitalen Filters dementsprechend in insgesamt drei Stufen verändert werden kann.

6. Elektronische Klassierwaage nach Anspruch 1, dadurch gekennzeichnet,
- daß jedem Grenzgewichtsspeicher (5,6) ein Subtrahierer (3,4) zugeordnet ist, der die Differenz zwischen dem Ausgangssignal des digitalen Filters (2) und dem jeweiligen Grenzgewicht bildet,
- daß jedem Subtrahierer (3,4) mindestens ein Komparator (9,10) nachgeschaltet ist, der die Differenz mit einem vorgegebenen Schwellwert (11) vergleicht,

- und daß die Stillstandskontrollschaltung (28) ein engeres Stillstandskriterium einschaltet, falls einer der Komparatoren (9,10) signalisiert, daß die Differenz unterhalb des vorgegebenen Schwellwertes (11) liegt.

7. Elektronische Klassierwaage nach Anspruch 6, dadurch gekennzeichnet,

- daß jedem Subtrahierer (3,4) zwei Komparatoren nachgeschaltet sind, die die Differenz mit zwei vorgegebenen Schwellwerten vergleichen,

- und daß die Stillstandskontrollschaltung (28) dementsprechend eines von drei verschiedenen Stillstandskriterien einschaltet.

STILLSTANDS-
KONTROLL-
SCHALTUNG

GRENZGEWICHT 2

GRENZGEWICHT 1

SCHWELLWERT

Fig.1

Fig. 2

EP 0 354 339 A2

$\triangle m$

$\triangle m_2$

a

a

**Fig. 3**

31

31

31

30

30

30

$\triangle m_1$

$G_1$

$G_2$

m

$\triangle m$

c

c

**Fig. 4**

$\triangle m_3$

41

41

41

b

b

40

40

40

40

40

$\triangle m_2$

$\triangle m_1$

$G_1$

$G_2$

m